# EUROPEAN PATENT APPLICATION

(11) **EP 1 170 660 A2**
(43) Date of publication of application: **09.01.2002**
(21) Application number: 01305841.7
(22) Date of filing: 06.07.2001
(51) Int. Cl.: G06F 9/445

(54) **A method and apparatus for upgrading software at a remote fuelling site**

(30) Priority: 06.07.2000 US 611087
(71) Applicant: Marconi Commerce Systems Inc., Greensboro, NC 27420-2087 (US)
(72) Inventor: Johnson, William S., Guilford, North Carolina 27282-9477 (US)
(74) Representative: Fitchett, Stuart Paul

(57) **Abstract**

A method for upgrading software at a remote fueling station comprises determining from a database the present configuration of hardware and software at a remote fueling station (100). If the present configuration supports the upgrade and the remote fueling site wants the upgrade, a corporate computer (202) downloads the upgrade to a site controller (150) at the remote fueling site. Upon installation, the corporate computer updates the database and accounts for any transactions that are associated with the upgrade. Upgrades may be automatically provided under a warranty contract.

## Description

The present invention relates to updating software in remote fueling sites.

Fueling environments have become more sophisticated in recent years and now include complex software to operate fuel dispensers, site controllers, and a myriad of other devices within the fueling environment. The physical hardware of these devices is routinely upgraded as new features become available. Not only do the devices within the fueling environment continue to be upgraded, but also the software is periodically upgraded as new features or elements are added to the functionality. New software may include merely new features, a new operating system, an upgraded version of an operating system, or the like.

For basic fueling sites, there are typically three components having microprocessor controllers and software associated therewith. The primary computer of the fueling site is generally referred to as the site controller. Each fuel dispenser may also include one or preferably two microprocessors. The first microprocessor controls the core functions of the fuel dispenser such as the opening and closing of valves, meter readings, and the like. The second microprocessor controls the display functions, the printer for receipts, and other functions. These are known as CRIND™ functions by the assignee of the present invention. Some fuel dispensers integrate these two microprocessors into one, but the functions remain the same. Software is used to enable these microprocessors with all the desired functionality. The site controller may communicate with and/or control one or both of the microprocessors in the fuel dispenser depending on the installation.

Presently, companies that supply fuel dispensers and other fueling environment hardware are forced to rely on Authorized Service Contractors (ASCs) to perform upgrades and warranty related service. The company provides the ASC with a floppy disk having the new software version thereon. Upon a request from the fueling environment, an ASC must then personally visit the requesting fueling site and upload the software through the site controller. If the fuel dispenser software is being upgraded, the site controller must download the software to the fuel dispensers at the instruction of the ASC. Furthermore, when the fueling site is responsible for requesting software upgrades, the end result may be a patch work upgrade wherein different versions of software may exist on different fuel dispensers and the site controller. Thus, when the ASC visits the fueling environment to upload a newly requested version of the software to the site controller, the ASC may inadvertently install an upgrade that is incompatible with the existing software on the fuel dispensers, or create other incompatibilities within the system.

Some fuel dispensers store the software for the core functions on EEPROMs rather than other read/write capable memory. Thus, the ASC must manually replace the EEPROMs to perform a software upgrade for the core functions. Assignee of the present invention has recently introduced two fuel dispensers, ECLIPSE™ and ENCORE™ that replace the EEPROMs with FLASH memory. However, for existing fuel dispensers that use EEPROMs, there is great potential for error, as the EEPROMs for the upgrade may have been illegally copied by the ASC and there may be errors in the copied versions. Likewise, if they are improperly installed, additional errors may be generated. Finally, the EEPROMs may not be compatible with the software operating the site controller or the CRIND microprocessors.

Although this system has worked for many years, the pace with which technological advances in the fueling industry are made is accelerating. This acceleration spurs ever more frequent upgrades to the software in the fueling industry. Thus, any problems associated with the system will rapidly become exacerbated.

The present system has other failings in terms of how accounting is performed for the transaction associated with these upgrades. The first transaction is that between the company selling the upgrades and the fueling site purchasing the upgrades. The selling company must have an accurate count of exactly what was provided to the particular fueling site and how many copies were provided so that the fueling site may be billed accordingly. The second transaction lies between the ASC and the company selling the upgrade. The ASC is typically paid for each installation of a program that he or she performs. Thus, again, the selling company must have an accurate count of exactly what was provided to the particular fueling site and how many copies were provided so that the ASC may receive his appropriate commission. In the past, the ASC was responsible for keeping paper records of the work performed. While helpful, such documents are susceptible to fraud, human error, easy loss, or destruction. Additionally, there may be a transaction between the selling company and a third party software vendor. The selling company may owe royalties to the third party software vendor based on the upgrades provided. Thus, an accurate count of the upgrades must be kept so that the royalty payments are kept current.

In short, there remains a need for an improved method by which software upgrades may be distributed to remote fueling sites from the company responsible for the hardware at the fueling site and particulary a method of automatically upgrading software at remote locations without the need for an intermediary such as an ASC.

According to a first aspect of the present invention there is provided a method of upgrading software at a remote fueling site from a computer system comprising:
accessing a computer at the remote fueling site with said computer system;
determining what software upgrades may be available to said remote fueling site;
and downloading a software upgrade to said computer from said computer system.

According to a second aspect of the invention there is provided a computer comprising software adaped to access a remote computer at a remote fueling site; determine what software upgrades may be available to said remote fueling site; and download a software upgrade to said remote computer.

The present invention effectively eliminates the need for an Authorized Service Contractor (ASC) as part of the program to provide timely software upgrades at remote fueling sites. In particular, a database containing information relating to remote fueling sites' hardware and software configurations may exist on a corporate computer. As software upgrades become available through routine research and development by the corporation, reference is made to the database to determine what sites are capable of supporting the new software. Additionally, the database may provide information about what modifications would need to be made to sites that are presently not capable of supporting the new software so that those sites would be able to support the new software.

Once a determination is made, a notice may be sent to the remote fueling site to alert them as to the existence of the newly available upgrade. Once the remote fueling site has decided to purchase the upgrade, or if the upgrade is provided as part of a service commitment undertaken by the corporation, the corporate computer connects to a site controller at the remote fueling site an downloads the upgrade thereto. The corporate computer then instructs the site controller to pass any upgrades on to the fuel dispensers and other peripheral devices of the fueling site as needed or desired. The corporate computer updates the database as to the existence of the new software at a particular site and the process is repeated for other fueling sites that have requested the new upgrade.

After the upgrade is completed, accounting is performed to verify that any payments due are collected and that any royalties due third party software vendors are also paid.

One embodiment of the present invention will now be described, by way of example only, with reference to the accompanying figures of which:
Figure 1 is a simplified drawing of a fuel dispenser;
Figure 2 is a simplified drawing of a fueling environment;
Figure 3 is a simplified drawing of the overarching system of the present invention; and
Figure 4 is a flow chart for the preferred method of the present invention.

The present invention is directed to a method for improving upgrades to software in a fueling environment. However, a discussion of the physical elements comprising a fuel dispensing environment will be helpful as a background.

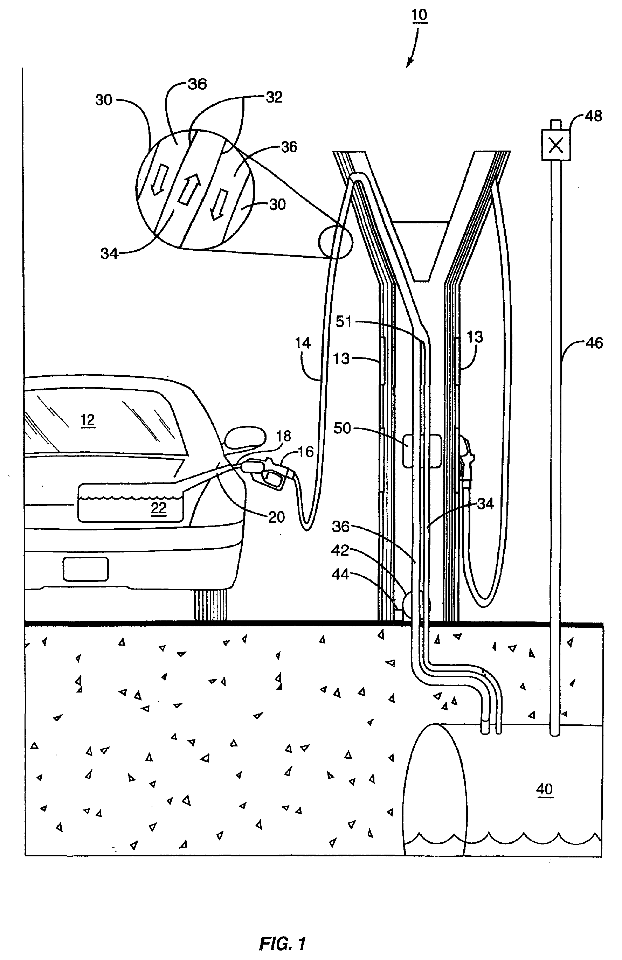

Referring to Figure 1, a fuel dispenser 10 is adapted to deliver a fuel, such as gasoline or diesel fuel to a vehicle 12 through a delivery hose 14, and more particularly through a nozzle 16 and spout 18. The vehicle 12 includes a fill neck 20 and a tank 22, which accepts the fuel and provides it through appropriate fluid connections to the engine (not shown) of the vehicle 12. A display 13 provides a user interface from which the user can determine a cost associated with a particular fueling transaction. While display 13 is preferably a visual display, it may equivalently be an audio user interface, such as might be used by the visually impaired or the like.

Flexible delivery hose 14 includes the product delivery line 36 and the vapor return line 34. Both lines 34 and 36 are fluidly connected to an underground storage tank (UST) 40 through the fuel dispenser 10. UST 40 may be vented by a vent line 46 capped by a vent valve 48 as is well understood in the art. Once in the fuel dispenser 10, the lines 34 and 36 separate at split 51. Note that split 51 need not be precisely where indicated, it only need be positioned within the housing of the fuel dispenser 10. Pump 42, controlled by motor 44 extracts fuel from the UST 40 and provides it to product delivery line 36. This can be done by creating a vacuum in line 36 or other equivalent means.

A vapor recovery system is typically present in the fuel dispenser 10. During delivery of fuel into the vehicle fuel tank 22, the incoming fuel displaces air containing fuel vapors. Vapor is recovered from the vehicle fuel tank 22 through the vapor return line 34 with the assistance of a vapor pump (not shown). A motor (also not shown) powers the vapor pump. A control system 50 receives information from a meter and a pulser in the fuel delivery line 36. Meter measures the fuel being dispensed while the pulser generates a pulse per count of the meter. Typical pulsers generate one thousand (1000) pulses per gallon of fuel dispensed. Control system 50 controls a drive pulse source that in turn controls the motor. The vapor recovery pump may be a variable speed pump or a constant speed pump with or without a controlled valve (not shown) as is well known in the art.

Control system 50 may be a microprocessor with an associated memory or the like and also operates to control the vast majority of the various functions of the fuel dispenser 10 including, but not limited to: those functions discussed above, fuel transaction authorization, encryption associated with fuel transaction authorization, fuel grade selection, display and/or audio control. As noted, control system 50 may actually comprise two microprocessors that may communicate with one another. Recent advances in the technology associated with the fuel dispenser 10 now enable the fuel dispenser 10 to act as an Internet interface, provide content, allow music downloads, or other functionality. Resident in the memory associated with the control system 50 is software that facilitates all of these functions. As a result of these increasing numbers of functions, the software resident in the memory associated with the control system 50 must periodically be upgraded to support new functions or improvements on existing functions.

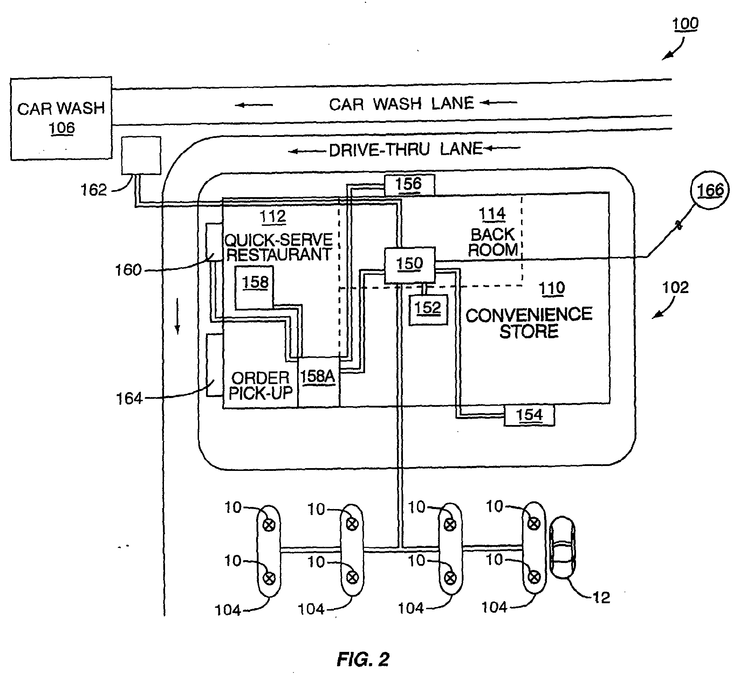

In addition to fuel dispenser 10, other devices may exist within a fueling site 100 that likewise may require electronic control systems and software to enable those electronic control systems as better understood with reference to Figure 2. Fueling site 100 may include a primary building 102, a plurality of fueling islands 104, a car wash 106, and other outbuildings as needed or desired. Primary building 102 may include a convenience store 110, a quick serve restaurant 112, a back room 114, and other subdivisions as needed or desired. It should be appreciated that the fueling site 100 is preferably an integrated fueling site that enables purchases of a multitude of goods and services at a multitude of locations, such as that disclosed in allowed U.S. patent 6098879, filed 17 February 1998, entitled FUEL DISPENSING SYSTEM PROVIDING CUSTOMER PREFERENCES, which is hereby incorporated by reference.

A site controller 150 for controlling this fully integrated fueling site may be positioned in back room 114, or other location within the fueling site 100 as needed or desired. Site controller 150 is preferably a computer, such as the G-SITE® sold by assignee of the present invention. Site controller 150 is communicatively linked to fuel dispensers 10, a station attendant terminal 152 positioned within the convenience store 110, an external customer terminal 154, an external quick serve restaurant order terminal 156, an internal quick serve restaurant terminal 158, an external sensor 160, a car wash terminal 162, and other electronically controlled terminals positioned throughout the fueling site 100. Quick serve restaurant 112 may include an auxiliary order pick up terminal 158A that is proximate an order pick up window 164. These terminals and sensors facilitate the fully integrated nature of the fueling site 100.

Additionally, the site controller 150 may control vapor control systems such as the vent valve 48, a site wide vapor recovery pump, or other such devices that may exist within fueling site 100. This may be part of a comprehensive vapor management plan designed to comply with the ever more restrictive CARB requirements or other government regulations. Such vapor management systems may have their own microprocessors and memory, or may be integrated into the site controller 150 as needed or desired. However, every change in the regulations may result in a change in the software or hardware and software to comply with the new regulation.

Site controller 150 may also have access to remote content providers 166 such as through the Internet, a dedicated phone line or the like. In the preferred embodiment, this is a high speed, large bandwidth connection allowing for fast transfers of large amounts of data.

Reference is again made to the previously incorporated FUEL DISPENSING SYSTEM PROVIDING CUSTOMER PREFERENCES application for a full description of the terminals and stations within the fueling site 100. That application also provides a description of the potential functions that many of the terminals and stations may perform.

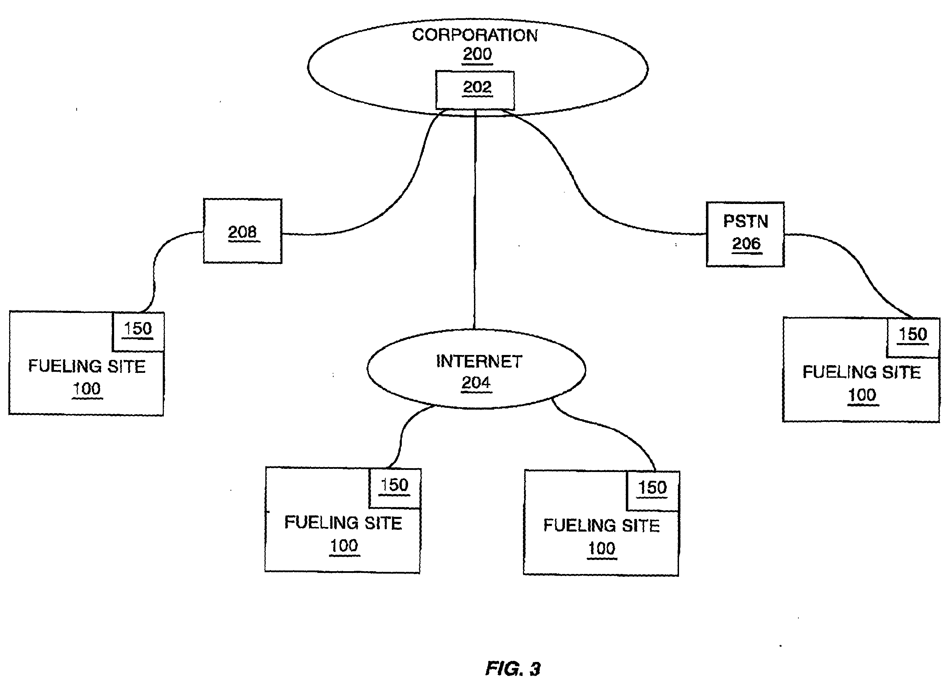

Figure 3 shows a number of different exemplary communicative links between fueling sites 100 and a corporation 200. Corporation 200 supplies the hardware and software to the fueling sites 100 as is well understood. Examples of such a corporation include Marconi Commerce Systems, Tokheim, Wayne, and the like. While a corporate entity is contemplated, it should be appreciated that for the purposes of the present invention, an S corporation, a partnership, a sole proprietorship, or other legal entity is also intended to be within the confines of the term "corporation." Corporation 200 may be a remote content provider 166 for the fueling site 100 if needed or desired. This may be appropriate, for example, when corporate advertising is delivered to the fuel dispensers 10. In the preferred embodiment, a corporate computer 202 exists within corporation 200. While the corporate computer 202 may be a centralized computer at one physical location, those skilled in the art will appreciate that the corporate computer 202 could use other architectures to accomplish the same functionality. In another embodiment, the corporate computer 202 could be a distributed system with multiple computer systems at one physical location and linked together through a local area network (LAN). Each of the computer systems performs part of the tasks in a centralized host computer system. In yet another embodiment, the corporate computer 202 could be a distributed system with multiple computer systems scattered across a number of physical locations but linked together through a wide area network (WAN). Each of the computer systems may also perform only one part of tasks of a centralized corporate computer 202.

It is specifically contemplated that the corporate computer 292 may be connected to the Internet 204 at all times and therefore should be adapted to have a fail safe or hot-swappable structure. This will allow continued operation even in the event of isolated failures within the system. One such structure is the NETFINITY™ server system supplied by IBM.

In the preferred embodiment, corporate computer 202 hosts a web page that acts as a portal to data stored within memory associated with the computer 202. It should be appreciated that the web page may include publicly accessible portions as well as proprietary portions that are only accessible through a firewall or other security measure.

Corporate computer 202 may be connected to site controllers 150 at remote fueling sites 100 by the Internet 204, by the Public Switched Telephone Network (PSTN) 206 through a dial in line and modems, or by a dedicated line 208.

For situations where the Internet 204 is used, the site controller 150 should have access to the Internet 204 by any conventional means such as a modem that accesses an Internet Service Provider such as BELLSOUTH.NET, GTE.NET, or the like. The modem may be a conventional 56.6K modem, a DSL modem, a cable modem, or the like as needed or desired. Alternatively, the site controller 150 may act as its own Internet gateway, having its own domain address. Still further, the fueling site 100 may have an Internet gateway to which the site controller selectively connects. Note further that while the connection is preferably wire-based for economic reasons, a wireless connection to the Internet 204 is also contemplated.

For situations where the PSTN 206 is used, the corporate computer 202 and the site controller 150 should both be equipped with a modem and engage in direct computer to computer communication through the modems and over a phone line that has been set aside for this direct communication. Site controller 150 and corporate computer 202 each have a phone account that the other computer may dial with their modem to secure access to each other. This communication method is well understood in the art. Again, while the PSTN 206 is preferred for economic reasons, it is possible that a wireless phone call be made as well.

For situations where a direct line 208 is used, rather than make a phone call with a modem, the computers have a dedicated link between one another. Appropriate links include ISDN lines, T-1 lines, or the like as needed or desired. The computers 202, 150 are networked together by any appropriate conventional system such as a peer-to-peer connection or a server-client based relation as needed or desired.

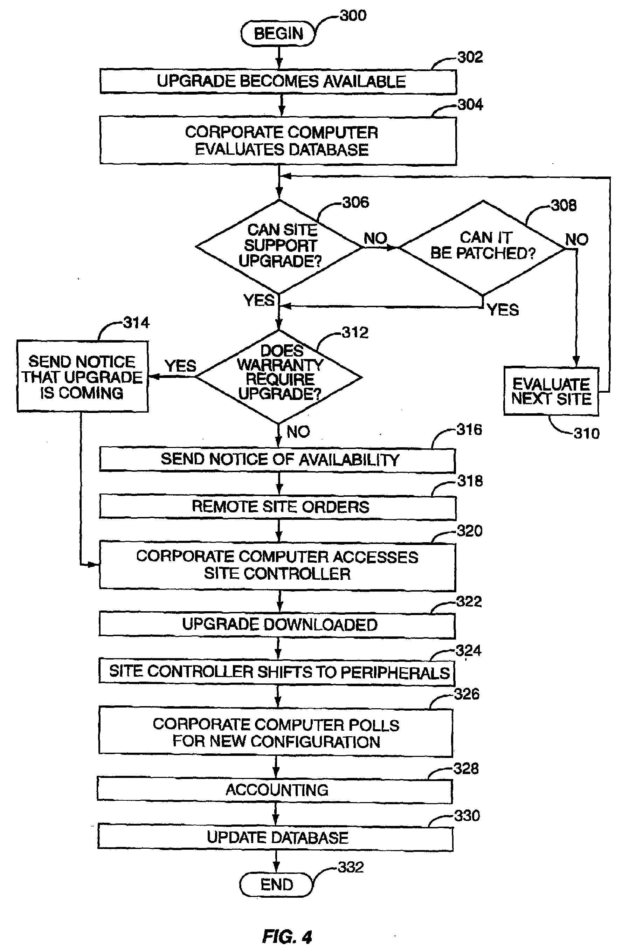

The corporation 200 should have within a memory associated with the corporate computer 202 a database including the hardware and software configurations of all remote fueling sites 100 that are customers of the corporation. This may include corporate owned stations, such as those directly owned by BP®, AMOCO®, SHELL®, or the like, as well as those owned by individuals or smaller corporations that may be franchisees of the oil companies. Alternative ways to construct such a database are also contemplated, such as a written inquiry comparable to a census form, a visual survey performed by an employee or contractor of the corporation 200, or other such techniques. The methodology of the present invention may begin at block 300 of Figure 4. Corporation 200 should know when the software upgrade becomes available (block 302), either from an alert by a third party software vendor, or as a result of internal development. Corporate computer 202 then evaluates the database with the hardware and software configurations of the remote fueling sites 100 (block 304). As a result of the information stored in the database, the corporate computer 202 may determine if a particular fueling site 100 can support the upgrade (block 306).

If the answer to block 306 is no, the fueling site 100 cannot support the upgrade, the corporate computer 202 may determine if the problem preventing the upgrade can be patched (block 308). If the answer to block 308 is also no, then the corporate computer may evaluate the next fueling site 100 within the database (block 310), effectively returning to block 306.

If the answer to block 306 or 308 is yes, the fueling site can support the upgrade without or with a patch, then the corporate computer 202 may determine if the upgrade is part of any existing warranty or other contractual obligations to the particular fueling site (block 312). Thus, if the a warranty agreement or other contract between corporation 200 and a particular fueling site 100 indicates that upgrades will automatically be provided free of charge, block 312 will be answered affirmatively, and corporation 200 may send notice to fueling site 100 that an upgrade is forthcoming (block 314). If the answer to block 312 is no, that no warranty or contract requires that an upgrade be provided, then the corporation may still send notice of the upgrade availability to the remote fueling site 100. Notices may be sent by any number of normal means including, but not limited to: normal mail, facsimile transmission, electronic mail, courier, or the like as needed or desired.

At some point after notice is sent, the remote fueling site 100 orders an upgrade (block 318). This may be immediately after receipt of the notice, or at some point in time subsequent thereto. Upon receipt of an order for a software upgrade, or as a result of the requirements of a warranty or service contract, the corporate computer 202 may eventually access the site controller 150 at a particular fueling site 100 (block 320). This may be accomplished by any of the communications techniques previously discussed with reference to Figure 3, or other equivalent means. The software upgrade is then downloaded to the site controller 150 from the corporate computer 202 (block 322). The download may transfer a .zip file or other file format as is well understood in the industry. From the transferred file, the software is installed at the site controller 150.

Note that it may be highly desirable to implement some form of authentication protocol between the corporate computer 202 and the site controller 150. This may be done by passwords, certain encryption algorithms, or the like as is well understood. This can be a unilateral or bilateral verification process as needed or desired. This is to prevent unauthorized access to the software upgrade and to prevent unauthorized upgrading of the software at the fueling site 100.

Site controller 150 then shifts any software to peripherals as needed or desired (block 324). This may be accomplished again through any well understood transfer means. Thus, for example, if the software upgrade were to provide additional functionality to the fuel dispensers 10, after installation on the site controller 150, the software would be transferred to the fuel dispensers 10 and the copy eliminated from the site controller 150. Alternatively, for example, if the upgrade were to enable better communication between the site controller 150 and the fuel dispensers 10, copies of the new software, or at least the relevant portions would remain on the site controller 150 and the other relevant portions downloaded to the fuel dispensers 10. Note that the software may be for any peripheral device in the fueling site 100 or the site controller 150, not just for the fuel dispensers 10.

Note further that the corporate computer 202 could communicate directly with the peripheral device if needed or desired. However, this may require prohibitively expensive communication links between the elements and is not preferred. In the event that a direct link were provided, the software would be installed directly to the peripheral without the need for intermediate storage on the site controller 150.

Additionally, it should be appreciated that regardless of where the software is initially installed and ultimately installed, if any patches are required to enable the software they would be downloaded either before or after the original software download.

After successful installation, the corporate computer 202 may poll the fueling site 100, and particularly the site controller 150, for information relating to the new configuration of software at the fueling site 100 (block 326). Part of this polling would determine how many peripherals or site controllers received a particular upgrade. Additionally, the polling may determine if any new hardware has been installed since corporate computer 202 last evaluated the fueling site 100 or since the data was entered in the database by whatever means. This information is returned to the corporate computer 202 and may be compared to the information resident in the database so that accounting may be performed (block 328). Accounting may include payments to third party software vendors representative of royalties due them. Further, accounting may include billing the fueling sites for the upgrades installed. Alternatively, the bill may already have been generated and accounting merely tracks payment of the bill. Other accounting steps may be taken as needed or desired.

Corporate computer 202 may then update the database (block 330). Note that this may be accomplished before the accounting step, but one way that accounting can be accomplished is through the comparison of the information in the database to the information received from the polling. However, these steps could be reversed, but more information would have to be temporarily stored. Note that this transposition of the steps of the present method in general is possible and the precise order in which the steps of the present invention are invoked is not critical to the present invention. The process then ends (block 330).

Additional functions may also be performed in the corporation 200 with the information within the database. In particular, a service department of the corporation 200 may access the records to make sure that fueling sites 100 are getting the service for which they have contracted, or that they need to stay competitive. Additionally, a warranty department could access to records to make similar inquiries, but related more specifically to service and upgrades that are required as part of a warranty contract. Further, a marketing department could access the information to determine which fueling sites 100 should receive mailings notifying them of newly available upgrades, service options, or the like that may be helpful to the fueling site 100. While the term "department" has been used, the term is used herein to include occasions where there is not a corporate structure, or personnel who perform these functions are not necessarily organized in a discrete department. The term is meant to be construed broadly.

Still further, the costs associated with the services and upgrades may be evaluated by personnel in marketing to determine warranty pricing based on the number of upgrades that are being performed. Additionally, the costs associated with upgrades and services may be matched against research and development costs to determine if pricing associated with the products corresponds to the costs associated with creating those products. Other database mining may be accomplished as needed or desired. The present examples are not intended to be limiting.
The present invention may, of course, be carried out in other specific ways other than those herein set forth, without departing from scope of the appended claims.

## Claims

1. A method of upgrading software at a remote fueling site (100) from a computer system (202) **characterised in** comprising in the steps of:
accessing a computer (150) at the remote fueling site with said computer system (202);
determining what software upgrades may be available to said remote fueling site;
and downloading a software upgrade to said computer (150) from said computer system (202).

2. A method as claimed in claim 1 wherein said computer system (202) comprises a corporate computer.

3. A method as claimed in claim 1 or 2 wherein said determining step comprises evaluating a database to determine what software upgrades may be available.

4. The method of claim 3 further comprising generating the database by generating records related to hardware and software configurations at each of a plurality of remote fueling sites (100).

5. The method of any proceeding claim wherein the computer system (202) accesses a computer of a site controller (150) at the remote fueling site (100).

6. The method of claim 5 further comprising installing software upgrades to peripheral devices (10,158) within the fueling site (100) from said site controller (150) subsequent to said downloading.

7. The method of any proceeding claim wherein the computer system (202) accesses a computer (50) of a peripheral device (10,158) at the remote fueling site.

8. The method of any proceeding claim further comprising generating a record of any upgrades provided to a particular fueling site (100).

9. The method of claim 8 further comprising accounting for said any upgrades provided to a particular fueling site (100) with reference to said record.

10. The method of claim 9 wherein said accounting comprises paying a royalty for at least one of said any upgrades.

11. The method of any proceeding claim further comprising polling said remote fueling site (100) to determine a new hardware and software configuration for updating said database.

12. The method of any proceeding claim wherein accessing said computer (150)at the remote fueling site comprises accessing the site controller over the Internet (204).

13. The method of any proceeding claim wherein accessing said computer at the remote fueling site comprises accessing the site controller over a dedicated communications line (208).

14. The method of any proceeding claim wherein accessing said computer at the remote fueling site comprises accessing the site controller over the PSTN (206).

15. The method of any proceeding claim further comprising determining if said upgrade is required by a contract.

16. The method of any proceeding claim further comprising sending a notice to said remote fueling site (100) informing the remote fueling site as to the availability of an upgrade.

17. A computer (202) **characterised in** comprising software adapted to
access a remote computer (150) at a remote fueling site (100);
determine what software upgrades may be available to said remote fueling site; and
download a software upgrade to said remote computer.

18. The computer of claim 17 wherein said computer is a corporate computer (202).

19. The computer of claim 17 or 18 wherein said software is further adapted to provide a patch so that said remote fueling site (100) is capable of supporting the software upgrade.

20. The computer of any one of claims 17 to 19 wherein the download to said remote computer comprises a download to a fuel dispenser (10).

21. The computer of any one of claims 17 to 19 wherein the download to said remote computer comprises a download to a site controller (150).
